## Europäisches Patentamt

## European Patent Office

## Office européen des brevets

(19)

(11) Veröffentlichungsnummer: **0 215 365**
**B1**

(12) # EUROPÄISCHE PATENTSCHRIFT

(45) Veröffentlichungstag der Patentschrift:
31.01.90

(21) Anmeldenummer: 86112041.8

(22) Anmeldetag: 01.09.86

(51) Int. Cl.⁴: **F16F 1/36**, B60G 11/02,
F16F 1/18

(54) **Faserverstärkte Kunststoff-Blattfeder.**

(30) Priorität: 11.09.85 DE 3532297

(43) Veröffentlichungstag der Anmeldung:
25.03.87 Patentblatt 87/13

(45) Bekanntmachung des Hinweises auf die Patenterteilung:
31.01.90 Patentblatt 90/5

(84) Benannte Vertragsstaaten:
AT BE CH DE FR GB IT LI LU NL SE

(56) Entgegenhaltungen:
EP-A- 0 092 399
EP-A- 0 115 696
EP-A- 0 130 688
EP-A- 0 158 623
GB-A- 2 148 450
GB-A- 2 158 548
GB-A- 2 160 616
US-A- 3 061 301

PATENTS ABSTRACTS OF JAPAN, Band 7,
Nr. 261 (M-257)[1406], 19. November 1983; &
JP-A-58 142 044 (HORIKIRI BANE SEISAKUSHO
K.K.) 23-08-1983
PATENTS ABSTRACTS OF JAPAN, Band 6,
Nr. 120 (M-140)[998], 3. Juli 1982; &
JP-A-57 47 044 (NIPPON HATSUJIYOU K.K.) 17-03-1982

(73) Patentinhaber: Techno Saarstahl GmbH,
Bismarckstrasse 57, D-6620 Völklingen(DE)

(72) Erfinder: Fröhlke, Manfred, Ing., Nordfeldstrasse 10,
D-6682 Ottweiler(DE)

(74) Vertreter: Vièl, Georg, Dipl.-Ing., Am Zimmerplatz 16,
D-6606 Saarbrücken-Gersweiler(DE)

(56) Entgegenhaltungen: (Fortsetzung)
IDEM
PATENTS ABSTRACTS OF JAPAN, Band 6,
Nr. 220 (M-169)[1098], 5. November 1982; &
JP-A-57 124 141 (HORIKIRI BANE SEISAKUSHO
K.K.) 02-08-1982

ACTORUM AG

## Beschreibung

Die Erfindung betrifft eine faserverstärkte Kunststoff-Blattfeder, bei der an den Enden von Fasersträngen umgebene rohrförmige Büchsen vorhanden sind, und in der Mitte eine Haltevorrichtung angebracht ist.

Blattfedern aus faserverstärktem Kunststoff sind insbesondere für Kraftfahrzeuge interessant, weil sie gegenüber Blattfedern aus Metall u.a. wesentlich leichter und gegen Korrosion unempfindlich sind.

Aus der DE-A 3 330 054 ist eine Blattfeder aus faserverstärktem Kunststoff bekannt, bei der an den Enden die zur Befestigung erforderlichen Büchsen (Augen) angeschraubt sind. Auch ist in der Mitte der Blattfeder eine längliche Aussparung vorgesehen, durch die ein Bolzen der verschraubbaren Haltevorrichtung geht. Die an den Enden befindlichen Bohrungen und die Aussparung im Körper des Federblattes bringen eine hohe Bruchgefahr mit sich.

Auch die Blattfeder nach der EP-B 0 047 074 hat diesen Nachteil, weil die Blattfeder in der Mitte eine quer zur Längsachse verlaufende Bohrung aufweist.

Aus der US-A 4 468 014 ist eine in Stahl-Kunststoff-Bauweise realisierte Blattfeder bekannt. Die dabei vorgesehene Mitten-Halterung ist nicht geeignet, die Lage der einzelnen Federblätter relativ zur Fahrzeugachse zu fixieren. Auch ergibt das Umfassen der Büchsen mit zwei Stahlblechen keine größeren Belastungen standhaltende Einheit.

Was den Verlauf der Faserstränge anbelangt, so ist es bekannt, mit Kunstharz getränkte Faserstränge endlos um die Federaugen zu legen (DD-B 40 198). Nach diesem Prinzip sind Blattfedern nur umständlich und mit großem Aufwand herstellbar.

Aus JP-A 58 142 044 ist eine Kunststoff-Blattfeder bekannt, bei der zwingend an den Enden Klammern erforderlich sind, um eine Kraftaufnahme zu realisieren. Eine solche Feder hat keine besonders hohe Belastbarkeit.

Die JP-A 57 124 141 gibt eine Kunststoff-Blattfeder an, bei der bestimmte Fasern um das eigentliche Federnblatt gewickelt sind. Damit ist kein gleichmäßiger Kraftfluß von am Auge angreifenden Kräften in das Federnblatt gewährleistet.

Der Erfindung liegt die Aufgabe zugrunde, in den Körper einer faserverstärkten Kunststoff-Blattfeder gut integrierte Federaugen in kunststoffgerechter Ausführung zu realisieren und in der Mitte eine einfache, die Blattfeder seitlich und in Längsrichtung fixierende Haltevorrichtung vorzusehen. Dabei soll die Kunststoff-Blattfeder mit beliebiger Federkennlinie bei leichter Bauweise herstellbar sein.

Diese Aufgabe wird erfindungsgemäß dadurch gelöst, daß die sich von Büchse zu Büchse erstreckenden Faserstränge die Büchsen umgreifend und nach Umlauf der Büchsen an den durchgehenden Fasersträngen endend ausgebildet sind und die Haltevorrichtung aus einem U-förmigen mit nach außen gebogenen Rändern sowie einem Zentrier-Bolzen versehenen Unterteil und einem mit diesem verklemmten flachen, mit in Richtung zu dem Unterteil gebogenen Ränder aufweisenden Oberteil besteht.

Nach einer weiteren Ausbildung der Erfindung ist vorgesehen, daß zwischen den sich von Büchse zu Büchse erstreckenden Fasersträngen sich von der Mitte der Blattfeder her erstreckende Faserlagen angeordnet sind.

Nach der Erfindung ist es auch zweckmäßig, wenn an den Endbereichen den Federkörper umfassend Klammern vorgesehen sind.

Die mit der Erfindung erzielten Vorteile bestehen insbesondere darin, daß eine einfach und kostengünstig herstellbare faserverstärkte Kunststoff-Blattfeder zur Verfügung steht, bei der eine problemlose Krafteinleitung möglich ist. Außerdem besteht kaum eine Bruchgefahr, da ein kompakter, mit ungestörtem Faserverlauf ausgerüsteter Federkörper vorhanden ist.

Die Erfindung wird anhand der Zeichnungen näher erläutert.

Es zeigen

Fig. 1 eine mögliche Ausführung einer erfindungsgemäßen Blattfeder,

Fig. 2 einen Teil der neuen Blattfeder mit Einzelheiten des Faserverlaufes im Endbereich,

Fig. 3 und Fig. 4 eine neue Haltevorrichtung in zwei Ansichten,

Fig. 5 schematisch eine Blattfeder mit Haltevorrichtung,

Fig. 6 eine Klammer für die Endbereiche der Blattfeder und

Fig. 7 eine Blattfeder nach der Erfindung mit Klammern an den Endbereichen,

Fig. 8 Einzelheiten zum Faserverlauf in der Blattfeder,

Fig. 9 und Fig. 10 besondere seitliche Mittenausbildungen der Blattfeder.

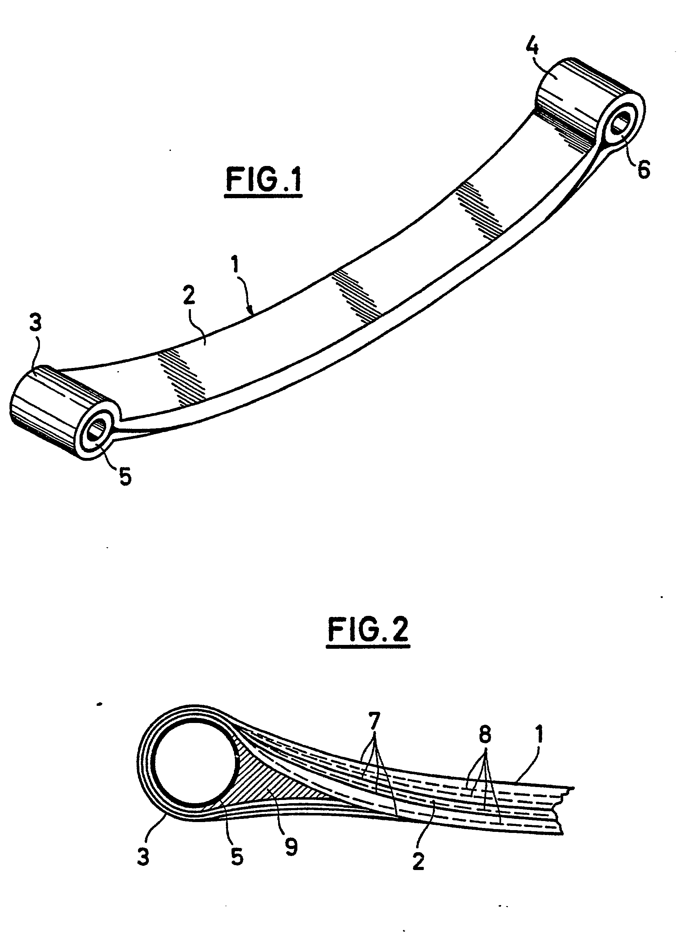

In Fig. 1 ist mit 1 die Kunststoff-Blattfeder bezeichnet, die aus einem gebogenen mittleren Bereich 2 und Endbereichen 3 und 4 besteht, die integral mit dem mittleren Bereich 2 verbunden sind. Die Endbereiche 3 und 4 sind mit rohrförmigen Büchsen 5 und 6 versehen, welche Verbindungsteile aufnehmen, um die Blattfeder 1 in bekannter Weise mit dem Fahrgestell eines Kraftfahrzeugs zu verbinden.

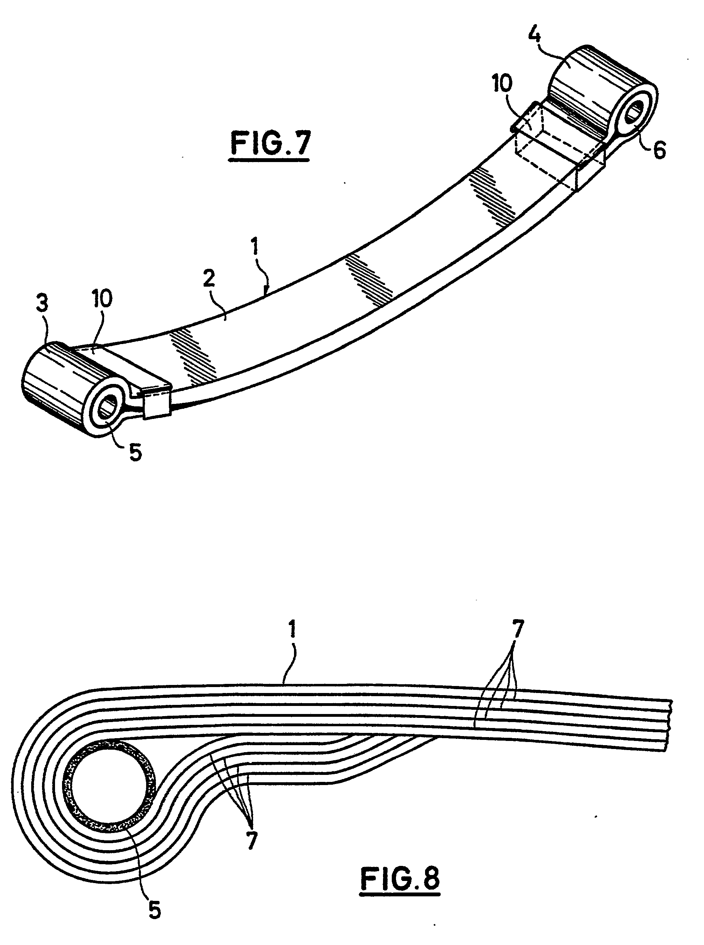

Ein wesentliches Element der Erfindung ist schematisch in Fig. 2 und Fig. 8 dargestellt: im Gegensatz zu den gemäß dem Stand der Technik mit endlosen Fasersträngen umwickelten Büchsen 5, 6 sind nach der Erfindung die Faserstränge 7 lediglich im Endbereich 3, 4, die Büchsen (Augen) 5, 6 umgreifend, wirksam, das heißt die Faserstränge 7 umfassen die Büchsen 5 und 6 und enden nach dem Umlauf. Die durchlaufenden Faserstränge 7 binden sozusagen die Büchsen 5, 6 in den restlichen Körper 2 der Blattfeder 1 ein. Dieses Einbinden wird noch verbessert, wenn zwischen die Faserstränge 7 sich von der Mitte der Blattfeder 1 her bis an die Büchsen 5, 6 sich erstreckende Faserlagen 8 (Fig. 2) vorgesehen sind. Der sich ergebende keilförmige Zwischenraum 9 wird mit faserverstärktem Kunststoff gefüllt.

Das Zusammenwirken der Endbereiche 3, 4 und des Mittelteils 2 kann noch durch an den Endbereichen 3, 4 den Federkörper umfassende Klammern 10 verbessert werden, wie das Fig. 7 zeigt. Die Gefahr der Delaminierung ist dann noch geringer als bei der Ausführung nach Fig. 2.

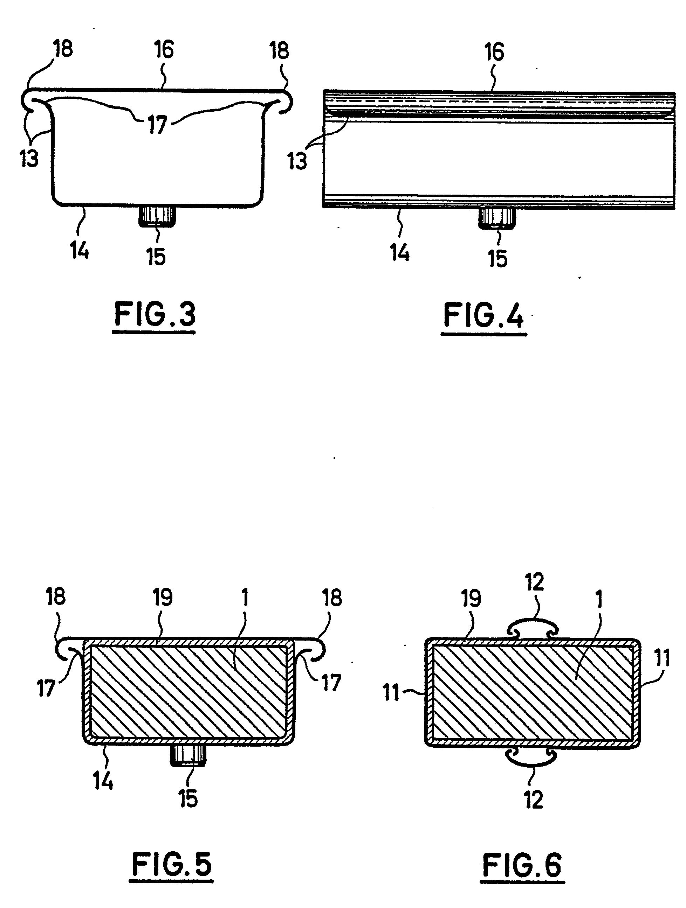

Die Klammern 10 können entsprechend Fig. 6 ausgebildet sein: zwei U-förmige Teile 11, die durch Riegel 12 miteinander verbunden sind. Die Klammern 10 in Fig. 7 können selbstverständlich auch so gestaltet sein, wie das in den noch zu beschreibenden Fig. 3, 4 und 5 gezeigt ist, allerdings ohne den dort gezeigten Zentrier-Bolzen 15.

Die Blattfeder 1 muß in ihrer Mitte an dem Kraftfahrzeug seitlich und in Längsrichtung fixiert werden. Dazu bedarf es eines an sich bekannten Zentrier-Bolzens 15, der erfindungsgemäß den Verlauf der Faserstränge 7 und 8 nicht beeinflussend an der Kunststoff-Blattfeder 1 angebracht ist. Nach der Erfindung kann der Zentrier-Bolzen 15 Teil einer Haltevorrichtung 13 sein, die aus zwei Teilen bestehen kann, einem U-förmigen Unterteil 14 mit Zentrier-Bolzen 15 und einem im wesentlichen flach ausgebildeten Oberteil 16 (Fig. 3 und 4). Das U-förmige Unterteil 14 hat nach außen gebogene Ränder 17, denen in Richtung zu dem Unterteil 14 gebogene Ränder 18 des Oberteils 16 zugeordnet Ober- und Unterteil 16, 14 sind, gegebenenfalls mit einer elastischen Zwischenlage 19, in Fig. 5, um die Blattfeder 1 gelegt und mit dieser durch die krallenartige Ausbildung der Ränder 17, 18 verklemmt. So bleibt der Federkörper unbeeinflußt durch Bohrungen bzw. Aussparungen, die den Faserverlauf stören und damit die Bruchgefahr der Blattfeder erhöhen.

Eine erfindungsgemäße Blattfeder kann als Einblatt-Parabelfeder ausgebildet sein, beispielsweise mit über die Länge sich verändernder Dicke, wobei die größte Dicke in der Mitte ist. Es ist aber auch möglich, aus erfindungsgemäßen Blattfedern einen Mehrblatt-Aufbau auszuführen.

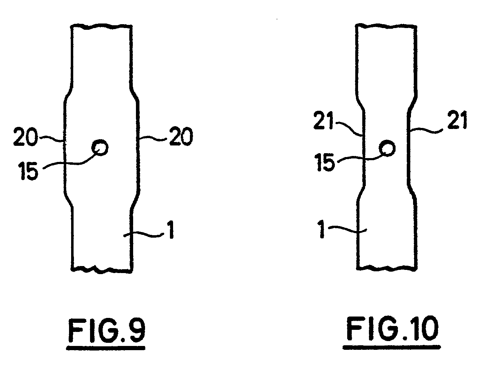

Gemäß der Erfindung kann zur Verbesserung des Formschlusses Blattfeder 1/Haltevorrichtung 13 die Blattfeder 1 im Bereich des Zentrier-Bolzens 15 Erhebungen 20 (Fig. 9) oder Vertiefungen 21 (Fig. 10) aufweisen. Wenn die Haltevorrichtung 13 bzw. deren Unterteil 14 seitlich diesen Erhebungen 20 bzw. Vertiefungen 21 zugeordnete Aus- bzw. Einbuchtungen (nicht dargestellt) hat, dann ergibt sich eine gute Fixierung der Blattfeder 1 in Längsrichtung.

## Patentansprüche

1. Faserverstärkte Kunststoff-Blattfeder, bei der an den Enden von Fasersträngen umgebene rohrförmige Büchsen vorhanden sind, und in der Mitte eine Haltevorrichtung angebracht ist, dadurch gekennzeichnet, daß die sich von Büchse (5) zu Büchse (6) erstreckenden Faserstränge (7) die Büchsen (5, 6) umgreifend und nach Umlauf der Büchsen (5, 6) an den durchgehenden Fasersträngen (7) endend ausgebildet sind und die Haltevorrichtung (13) aus einem U-förmigen mit nach außen gebogenen Rändern (17) sowie einem Zentrier-Bolzen (15) versehenen Unterteil (14) und einem mit diesem verklemmten flachen, mit in Richtung zu dem Unterteil (14) gebogenen Räder (18) aufweisenden Oberteil (16) besteht.

2. Blattfeder nach Anspruch 1, dadurch gekennzeichnet, daß zwischen den sich von Büchse (5) zu Büchse (6) erstreckenden Fasersträngen (7) sich von der Mitte der Blattfeder (1) her erstreckende Faserlagen (8) angeordnet sind.

3. Blattfeder nach Anspruch 1 oder 2, dadurch gekennzeichnet, daß an den Endbereichen (3, 4) den Federkörper umfassend Klammern (10) vorgesehen sind.

## Claims

1. Fibre-reinforced plastic leaf spring, in which tube-shaped bushes, surrounded by strands of fibre, are provided at the ends and a retaining device is mounted in the middle, characterized in that the strands (7) of fibre stretching from bush (5) to bush (6) are designed to embrace the bushes (5, 6) and, after passing round the bushes (5, 6), to end at the continuous strands (7) of fibre, and the retaining device (13) consists of a U-shaped bottom part (14) provided with edges (17) bent outwards and a centring bolt (15) and of a flat upper part (16), clamped to the lower part (14), having edges (18) bent in the direction of the bottom part (14).

2. Leaf spring according to Claim 1, characterized in that layers (8) of fibre, stretching from the middle of the leaf spring (1), are arranged between the strands (7) of fibre stretching from bush (5) to bush (6).

3. Leaf spring according to Claim 1 or 2, characterized in that clamps (10), enclosing the spring body, are provided at the end regions (3, 4).

## Revendications

1. Ressort à lame en matière plastique reforcée de fibres, dans lequel il est prévu aux extrémités des douilles tubulaires entourées d'écheveaux de fibres et au milieu un dispositif de fixation, caractérisé en ce que les écheveaux de fibres (7), s'étendant d'une douille (5) à l'autre (6), sont constitués de manière à entourer les douilles (5, 6) et à se terminer, après passage autour des douilles (5 et 6), sur les écheveaux de fibres (7) continus et le dispositif de fixation (13) est constitué d'une partie inférieure (14) en forme de U et munie de bords (17) coudés vers l'extérieur, ainsi que d'un tourillon de centrage (15), et d'une partie supérieure (16) plate, bloquée avec la partie inférieure (14) et comportant des bords (18) coudés en direction de la partie inférieure.

2. Ressort à lame suivant la revendication 1, caractérisé en ce qu'entre les écheveaux de fibres (7) s'étendant d'une douille (5) à l'autre (6) sont disposées des couches de fibres (8) s'étendant à partir du milieu du ressort à lame (1).

3. Ressort à lame suivant la revendication 1 ou 2, caractérisé en ce qu'il est prévu dans les parties d'extrémité (3, 4) des pinces (10) entourant le corps du ressort.

FIG.1

FIG.2

EP 0 215 365 B1

FIG.3

FIG.4

FIG.5

FIG.6

EP 0 215 365 B1

## FIG.7

## FIG.8

20 ~     ~ 20

15 ~

1

**FIG.9**

21 ~     ~ 21

15 ~

1

**FIG.10**